# EUROPEAN PATENT SPECIFICATION

(11) **EP 3 687 210 B1**
(45) Date of publication and mention of the grant of the patent: **07.01.2026**
(21) Application number: 18886137.1
(22) Date of filing: 09.11.2018
(51) Int. Cl.: H04W 16/22, H04W 24/04, H04W 24/08

(54) **PATH LOSS PREDICTION METHOD AND APPARATUS**
VERFAHREN UND VORRICHTUNG ZUR VORHERSAGE VON WEGVERLUSTEN
PROCÉDÉ ET APPAREIL DE PRÉDICTION D'AFFAIBLISSEMENT DE PROPAGATION

(30) Priority: 05.12.2017 CN 201711271150
(43) Date of publication of application: 29.07.2020
(73) Proprietor: Huawei Technologies Co., Ltd., Longgang District Shenzhen, Guangdong 518129 (CN)
(72) Inventor: SU, Huiqiao, Shenzhen Guangdong 518129 (CN); HE, Feng, Shenzhen Guangdong 518129 (CN); XU, Zhijie, Shenzhen Guangdong 518129 (CN); MIAO, Jiacheng, Shenzhen Guangdong 518129 (CN); LI, Xiaolong, Shenzhen Guangdong 518129 (CN)
(74) Representative: Pfenning, Meinig & Partner mbB
(86) International application number: PCT/CN2018/114881
(87) International publication number: WO 2019/109780

(56) References cited:
- WO-A1-2012/075805
- WO-A1-2016/001473
- CN-A- 101 998 411
- CN-A- 102 869 020
- US-A1- 2017 195 892

## Description

This application claims priority to Chinese Patent Application No. 201711271150.6, filed with the Chinese Patent Office on December 5, 2017 and entitled "PATH LOSS PREDICTION METHOD AND APPARATUS".

### TECHNICAL FIELD

Embodiments of this application relate to the field of communications technologies, and in particular, to a path loss prediction method and apparatus.

### BACKGROUND

In an existing network planning technology, a finally determined solution of the radio network planning and design depends on a result of simulation coverage prediction to a great extent. The coverage prediction effect is limited by a propagation model (propagation model) selected by each cell, and accuracy and application scope of the selected propagation model may affect overall planning and design quality.

Currently, the following three types of propagation models are usually selected by the industry for coverage prediction: a deterministic propagation model, an empirical propagation model, and a big data-based classification fitting model. However, due to diversity and complexity of planning scenarios, the three types of propagation models need to be calibrated based on actual scenario data to predict a path loss. Then, network coverage can be predicted based on the predicted path loss, resulting in low prediction efficiency.

WO 2016/001473 A1 relates to system and method for radio and other parameter estimation based on maps.The method includes selecting at least one parameter dependent on location, and estimating values of the parameter at locations and times when measurements have not been carried out, wherein the estimating can be based on map data, measured values of the parameter and other location dependent data combining different maps with overlapping coverage.

### SUMMARY

Embodiments of this application provide a path loss prediction method and apparatus according to the independent claims, to resolve an existing problem of low prediction efficiency caused by propagation calibration during prediction of a propagation path loss. Particular embodiments are defined in the dependent claims.

To achieve the foregoing objective, the following technical solutions are used in the embodiments of this application:

According to a first aspect, an embodiment of this application provides a path loss prediction method, including: obtaining sample data, where the sample data includes a characteristic parameter that affects radio propagation between a transmitter and a cell, a parameter value of the characteristic parameter, and a measured path loss between each receiver in the cell and the transmitter; rasterizing the characteristic parameter to generate a feature image; constructing a deep learning model based on the feature image and the measured path loss, where an input variable of the deep learning model is the feature image, and an output variable of the deep learning model is used to indicate the path loss between each receiver in the cell and the transmitter; and predicting the path loss by using the constructed deep learning model. Nine feature images are generated respectively by using nine characteristic parameters: a building height, a ground object type, an altitude, a distance to the transmitter, a horizontal azimuth of the transmitter, a vertical azimuth of the transmitter, a height of the transmitter from the ground, a frequency at which the transmitter sends a signal, and transmit power of the transmitter.

Based on the foregoing solution, the sample data in an existing network may be obtained, and the deep learning model may be constructed based on the sample data, to obtain a model mapping relationship between each characteristic parameter that affects radio propagation between the transmitter and the receiver and the path loss, and the path loss is predicted by using the model mapping relationship, so that there is no need to calibrate an existing propagation model, thereby improving path loss prediction efficiency.

With reference to the first aspect, the rasterizing the characteristic parameter to generate a feature image includes: establishing a raster image by using the transmitter as a center, where the raster image includes at least one raster, and different rasters are located at different coordinate locations; traversing each raster in the raster image, using the raster as a pixel, and using a parameter value of the characteristic parameter corresponding to the pixel as a value of the pixel; and using the traversed raster image pixel as a value of the pixel; and using the traversed raster image as the feature image.

In this way, the feature image corresponding to the characteristic parameter may be generated by using a rasterization method, to meet an image input requirement of deep learning.

According to the invention, the characteristics are: a building height, a ground object type, an altitude, a distance to the transmitter, a horizontal azimuth of the transmitter, a vertical azimuth of the transmitter, a height of the transmitter from the ground, a frequency at which the transmitter sends a signal, transmit power of the transmitter, and the like.

In this way, an actual geographical feature and a feature of the transmitter itself may be used as characteristic parameters that affect radio propagation between the transmitter and the receiver, and no complex feature needs to be extracted, thereby enhancing adaptability of the deep learning model to a communication scenario.

With reference to the first aspect or any one of the possible implementations of the first aspect, in a third possible implementation of the first aspect, to improve precision of a path loss predicted by the deep learning model, before the constructing a deep learning model based on the feature image and the measured path loss, the method further includes: filtering the sample data; normalizing the parameter value of the characteristic parameter and the measured path loss that are in the filtered sample data; and rasterizing the normalized characteristic parameter to generate the feature image, and increasing a quantity of feature images through model flipping or model rotation.

In this way, the sample data may be filtered and cleaned, to improve quality of the sample data, increase the quantity of feature images, and improve an information input capability of the deep learning model.

With reference to the first aspect or any one of the possible implementations of the first aspect, the output variable of the deep learning model is the feature image corresponding to the path loss or a vector corresponding to the path loss.

In this way, the feature image or the vector may be used to indicate the output variable of the deep learning model, thereby improving output flexibility of the deep learning model.

According to a second aspect, an embodiment of this application provides a path loss prediction apparatus, including:
an obtaining unit, configured to obtain sample data, where the sample data includes a characteristic parameter that affects radio propagation between a transmitter and a cell, a parameter value of the characteristic parameter, and a measured path loss between a receiver in the cell and the transmitter, the parameter value of the characteristic parameter corresponds to a coordinate location, and the measured path loss corresponds to a coordinate location of the receiver;
an image generation unit, configured to rasterize the characteristic parameter to generate a feature image, where the feature image includes at least one pixel, and each pixel corresponds to one parameter value, wherein nine feature images are generated respectively by using nine characteristic parameters: a building height, a ground object type, an altitude, a distance to the transmitter, a horizontal azimuth of the transmitter, a vertical azimuth of the transmitter, a height of the transmitter from the ground, a frequency at which the transmitter sends a signal, and transmit power of the transmitter;
a model construction unit, configured to construct a deep learning model based on the feature image and the measured path loss, where an input variable of the deep learning model is the feature image, and an output variable of the deep learning model is used to indicate the path loss between the transmitter and the cell; and
a prediction unit, configured to predict the path loss by using the constructed deep learning model.

For a specific implementation of the path loss prediction apparatus, refer to the implementation of the path loss prediction method according to the first aspect or the possible implementations of the first aspect. Details are not described herein again. Therefore, the path loss prediction apparatus according to the aspect may achieve a beneficial effect the same as that in the first aspect.

According to one aspect, an embodiment of this application provides a path loss prediction apparatus. The path loss prediction apparatus may implement a function performed by the path loss prediction apparatus in the first aspect. The function may be implemented by hardware, or may be implemented by hardware executing corresponding software. The hardware or the software includes one or more modules corresponding to the function.

In a possible design, a structure of the path loss prediction apparatus includes a processor and a communications interface. The processor is configured to support the path loss prediction apparatus in performing a corresponding function in the foregoing method. The communications interface is configured to support the path loss prediction apparatus in communicating with another network element. The path loss prediction apparatus may further include a memory. The memory is configured to couple to the processor, and stores a program instruction and data that are necessary for the path loss prediction apparatus.

According to one aspect, an embodiment of this application provides a computer storage medium. The computer storage medium is configured to store a computer software instruction used by the foregoing path loss prediction apparatus, and the computer software instruction includes a program used to perform the solution of the foregoing aspects.

According to one aspect, an embodiment of this application provides a computer program product. The computer program product stores a computer software instruction used by the foregoing path loss prediction apparatus, and the computer software instruction includes a program used to perform the solution of the foregoing aspects.

According to one aspect, an embodiment of this application provides an apparatus. The apparatus exists in a form of a chip product. A structure of the apparatus includes a processor and a memory. The memory is configured to: couple to the processor, and store a program instruction and data that are necessary for the apparatus. The processor is configured to execute the program instruction stored in the memory, so that the apparatus is enabled to perform a function corresponding to the path loss prediction apparatus in the foregoing method.

### BRIEF DESCRIPTION OF DRAWINGS

FIG. 1 is a principle block diagram according to an embodiment of this application;
FIG. 2 is a schematic composition diagram of a path loss prediction apparatus according to an embodiment of this application;
FIG. 3 is a flowchart of a path loss prediction method according to an embodiment of this application.
FIG. 3a is a schematic diagram of rasterization according to an embodiment of this application;
FIG. 3b is a schematic diagram of a mapping relationship between a characteristic parameter and a path loss according to an embodiment of this application;
FIG. 3c is a schematic diagram of another mapping relationship between a characteristic parameter and a path loss according to an embodiment of this application;
FIG. 3d is a schematic composition diagram of a convolutional neural network according to an embodiment of this application;
FIG. 4 is a schematic composition diagram of another path loss prediction apparatus according to an embodiment of this application; and
FIG. 5 is a schematic composition diagram of still another path loss prediction apparatus according to an embodiment of this application.

### DESCRIPTION OF EMBODIMENTS

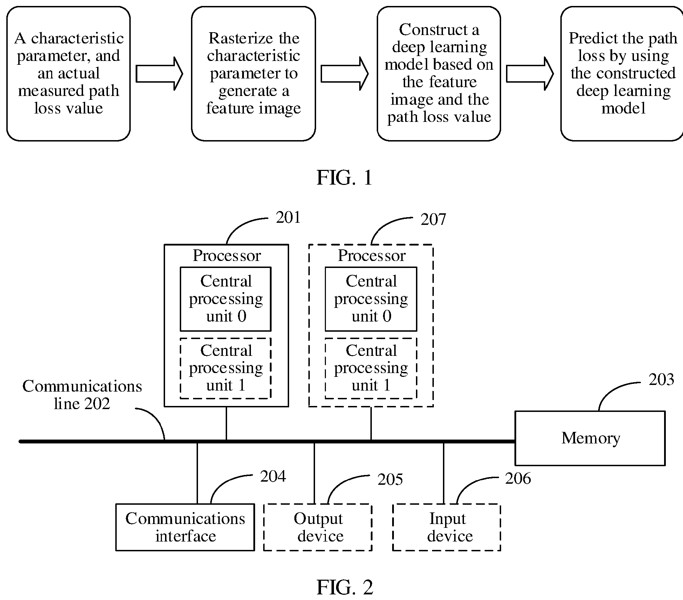

A basic principle of embodiments of this application is shown in FIG. 1, including: extracting a characteristic parameter that affects radio propagation between a transmitter and a receiver in a cell, and an actual measured path loss (referred to as a measured path loss for short) between the transmitter and the receiver; rasterizing the characteristic parameter to generate a feature image; and constructing a deep learning model (for example, a convolutional neural network model) by using the feature image and the measured path loss. The deep learning model is used to indicate a relationship between a path loss and a characteristic parameter that affects radio propagation between a transmitter and a receiver in a cell. Subsequently, when a path loss between the transmitter and the receiver is predicted, the characteristic parameter that affects radio propagation between the transmitter and the receiver may be input into the deep learning model to predict the path loss between the transmitter and the receiver, and path loss prediction does not need to be performed by calibrating an existing propagation model, thereby improving prediction efficiency.

Implementations in the embodiments of this application are described in detail below with reference to the accompanying drawings.

The path loss prediction method provided in the embodiments of this application may be used to predict a path loss between a transmitter and a receiver in any one of the following wireless communications systems: a universal mobile telecommunications system (Universal Mobile Telecommunications System, UMTS), a long term evolution (long term evolution, LTE) system, and a fifth generation (5-Generation, 5G) mobile communications technology, and the like. In the embodiments of this application, the transmitter may be any access device such as a NodeB (nodeB, NB), an evolved NodeB (evolution nodeB, eNB), an access node, a next generation NodeB (generation nodeB, gNB), a transmission/reception point (transmission receive point, TRP), or a transmission point (transmission point, TP) or an antenna array integrated in the access device. The receiver may be a receiving device such as a terminal device, or an antenna array integrated in the receiving device. The path loss prediction method may be performed by the path loss prediction apparatus shown in FIG. 2, or may be performed by any computer that can perform the path loss prediction method according to the embodiments of this application. This is not limited.

FIG. 2 is a schematic composition diagram of a path loss prediction apparatus according to an embodiment of this application. The apparatus may be independently deployed in a network planning system, or may be integrated into a server in the network planning system. This is not limited. As shown in FIG. 2, the path loss prediction apparatus may include the path loss prediction apparatus 200, including at least one processor 201, a communications line 202, a memory 203, and at least one communications interface 204.

The processor 201 may be a central processing unit (central processing unit, CPU), an application-specific integrated circuit (application specific integrated circuit, ASIC), one or more integrated circuits configured to implement the embodiments of this application, for example, one or more microprocessors (digital signal processor, DSP); or one or more field programmable gate arrays (field programmable gate array, FPGA).

The communications line 202 may include a path for transmitting information between the foregoing components.

The memory 203 may be a read-only memory (read-only memory, ROM) or another type of static storage device that can store static information and an instruction, a random access memory (random access memory, RAM), or another type of dynamic storage device that can store information and an instruction, or may be an electrically erasable programmable read-only memory (electrically erasable programmable read-only memory, EEPROM), a compact disc read-only memory (compact disc read-only memory, CD-ROM), or another compact disc storage medium, an optical disc storage medium (including a compact disc, a laser disc, an optical disc, a digital versatile disc, a Blu-ray disc, or the like), or a magnetic disk storage medium, another magnetic storage device, or any other medium that can be configured to carry or store expected program code in a form of an instruction or a data structure and that can be accessed by a computer, but is not limited thereto. The memory may exist independently, and is connected to the processor by using the communications line 202. Alternatively, the memory may be integrated with the processor.

The memory 203 is configured to store a computer-executable instruction for executing the solutions of this application, and the processor 201 controls the execution. The processor 201 is configured to execute the computer-executable instruction stored in the memory 203, to implement the path loss prediction method according to the following embodiments of this application. Optionally, the computer-executable instruction in the embodiments of this application may also be referred to as application program code. This is not specifically limited in the embodiments of this application.

The communications interface 204, which uses any apparatus such as a transceiver, is configured to communicate with another device or communications network, such as Ethernet, a radio access network (radio access network, RAN), or a wireless local area network (wireless local area network, WLAN).

During specific implementation. in an embodiment, the processor 201 may include one or more CPUs, for example, a CPU 0 and a CPU 1 in FIG. 2.

During specific implementation, in an embodiment, the path loss prediction apparatus 200 may include a plurality of processors, for example, a processor 201 and a processor 207 in FIG. 2. Each of these processors may be a single-core processor, or may be a multi-CPU processor. The processor herein may be one or more devices, circuits, and/or processing cores for processing data (for example, a computer program instruction).

During specific implementation, in an embodiment, the path loss prediction apparatus 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, a projector (projector), or the like. The input device 206 communicates with the processor 201, and may receive a user input in a plurality of manners. For example, the input device 206 may be a mouse, a keyboard, a touchscreen device, a sensing device, or the like.

The foregoing path loss prediction apparatus 200 may be a general-purpose device or a special-purpose device. During specific implementation, the path loss prediction apparatus 200 may be a desktop computer, a portable computer, a network server, a mobile phone, a tablet computer, a wireless terminal device, an embedded device, or a device having a structure similar to that in FIG. 2. A type of the path loss prediction apparatus 200 is not limited in the embodiments of this application.

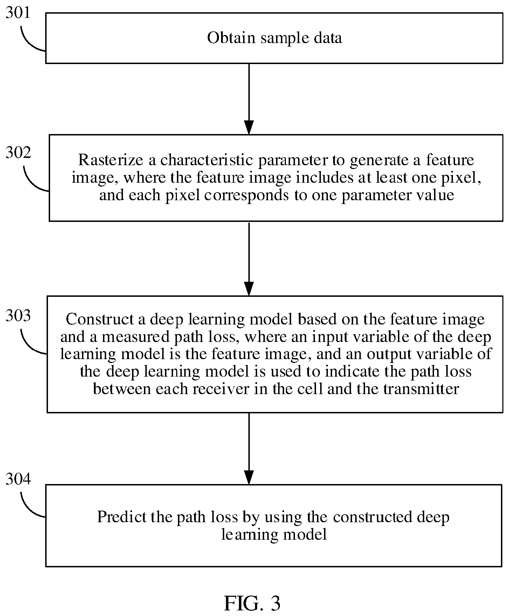

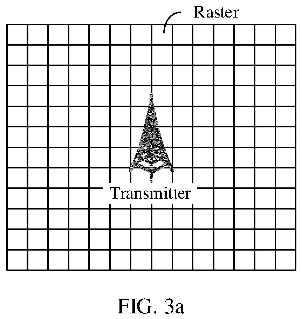

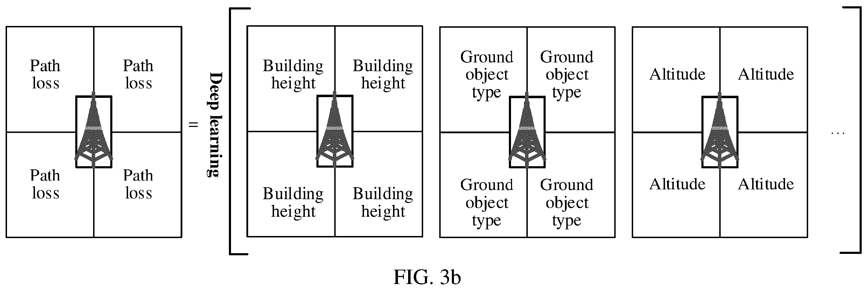

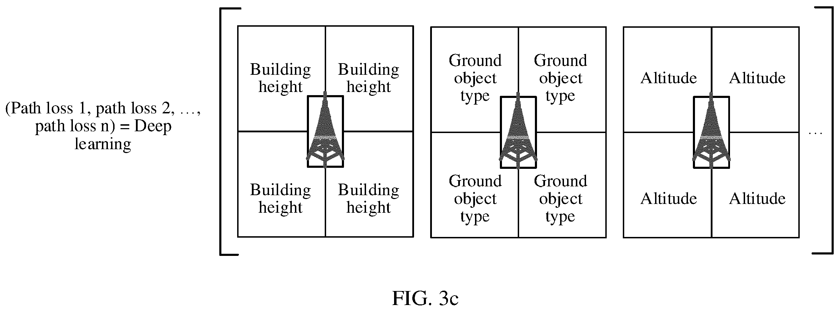

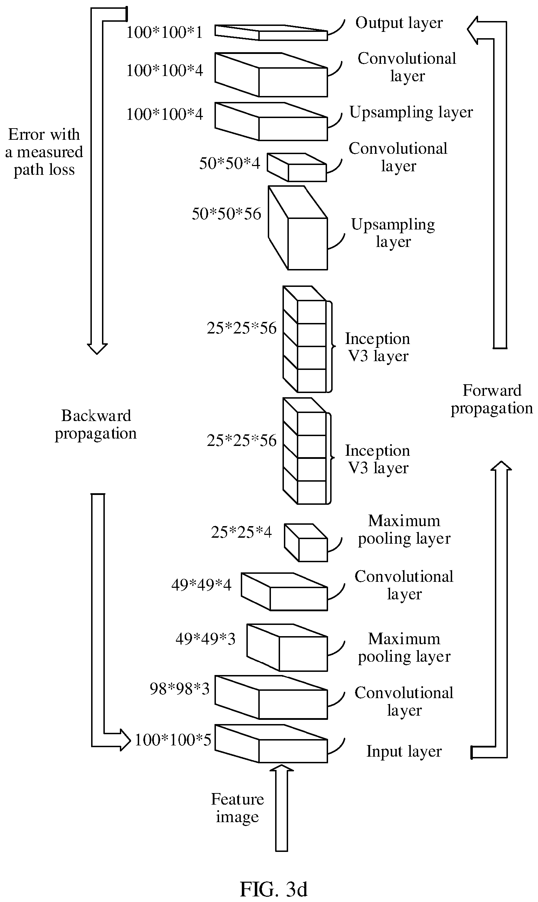

The path loss prediction method provided in the embodiments of this application is described in detail below with reference to the apparatus shown in FIG. 2. FIG. 3 is a flowchart of a path loss prediction method according to an embodiment of this application. The method is performed by the apparatus shown in FIG. 2. As shown in FIG. 3, the method may include the following steps.

Step 301: Obtain sample data.

The sample data corresponds to a cell, sample data corresponding to different cells may be the same or different, and sample data corresponding to each cell may include a characteristic parameter that affects radio propagation between a transmitter and a cell, a parameter value of the characteristic parameter, and a measured path loss between each receiver in the cell and the transmitter, and may further include other information. This is not limited. In this embodiment of this application, the parameter value of the characteristic parameter corresponds to a coordinate location, and parameter values of characteristic parameters corresponding to different coordinate locations may be different. The measured path loss corresponds to a coordinate location of the receiver, and measured path losses between the receiver and the transmitter at different coordinate locations may be different. The measured path loss may be carried in a measurement report (measurement report, MR), so that the path loss prediction apparatus obtains the measured path loss between the receiver and the transmitter from the MR. The coordinate location may be location information represented by using longitude and latitude.

The characteristic parameter that affects radio propagation between a transmitter and a cell may include a geographic characteristic of a cell covered by the transmitter and working parameter information of the transmitter. The geographical characteristic include: a building height, a ground object type, an altitude, and a distance to the transmitter. The building height may be a straight-line distance between a highest point of the building and a ground. The ground object type may be a type of a thing deployed on the ground, for example, may be different types of things such as a building and a communications device. The altitude may be a height from a highest point of the building to a sea level. The distance to the transmitter may be a straight-line distance between a coordinate location and the transmitter. In this embodiment of this application, a parameter value of each geographical feature (that is, a value of a geographical feature) may be determined by querying a three-dimensional (3 Dimensions, 3D) map in a geographic information system (geographic information system). The value of the ground object type may be a
number, a letter, or another value symbol. This is not limited. For example, it is assumed that 1 represents a building, and 2 represents a communications device. When a building is deployed at a coordinate location, a value of a ground object type corresponding to the coordinate location is 1. It should be noted that, in this embodiment of this application, a central point of an area may be considered as a coordinate location, a height of a highest building in the area is used as a building height corresponding to the coordinate location, a same type of things that have a maximum quantity and that are deployed in the area is used as the ground object type corresponding to the coordinate location, and a height of a highest building in the area is used as the altitude corresponding to the coordinate location.

The working parameter information of the transmitter includes: a horizontal azimuth of the transmitter, a vertical azimuth of the transmitter, a height of the transmitter from the ground, a frequency at which the transmitter sends a signal, and transmit power of the transmitter. The horizontal azimuth of the transmitter may refer to an included angle between a direction of a main lobe of the transmitter and a connection line between the transmitter and a coordinate location. The vertical azimuth of the transmitter may refer to an included angle between a downtilt angle of the transmitter and a connection line between the transmitter and a coordinate location. The height of the transmitter from the ground may be a straight-line distance between a highest point of the transmitter and the ground. The frequency at which the transmitter sends a signal may be a frequency at which the transmitter sends a signal to a coordinate location. The transmit power of the transmitter may be power at which the transmitter sends a signal to a coordinate location. In this embodiment of this application, the working parameter information of the transmitter may be obtained from configuration information of the transmitter.

It should be noted that the path loss described in this embodiment of this application may alternatively be replaced with another technical term used to represent severity of impact of a propagation feature from a transmitter to a receiver on propagation of an electromagnetic wave, for example, a level or reference signal received power (Reference Signal Receiving Power, RSRP). This is not limited. In addition, to improve accuracy of subsequent deep learning model construction, a large amount of sample data may be obtained in step 301, that is, sample data corresponding to a plurality of cells covered by a transmitter is obtained.

Step 302: Rasterize the characteristic parameter to generate a feature image, where the feature image includes at least one pixel, and each pixel corresponds to one parameter value.

The rasterizing the characteristic parameter to generate a feature image includes the following steps (1) to (3).

(1) Establish a raster image by using the transmitter as a center.

The raster image is a two-dimensional planar image. The raster image corresponds to a coverage area centered on a transmitter. The coverage area may be a regular area (for example, a square area or a rectangular area), and a size of the coverage area is not limited. For example, rasterization may be performed on a coverage area that is 50 m * 50 m or 100 m * 100 m and that is centered on a transmitter, to obtain a raster image. For example, as shown in FIG. 3a, a coverage area centered on a transmitter is divided into a plurality of rasters, and a divided image is used as a raster image. Sizes of all the rasters are the same, and lengths and widths of all the rasters may be the same, for example, may be 10 m or 20 m. In this embodiment of this application, each raster in the raster image may be considered as a pixel, and a coordinate location of the pixel may be a center location of the raster.

(2) Traverse each raster in the raster image, use the raster as a pixel, and use a parameter value of the characteristic parameter corresponding to the pixel as a value of the pixel.

The center coordinate of the raster may be used as the coordinate location of the pixel, and the parameter value of the characteristic parameter corresponding to the coordinate location is assigned to the pixel.

(3) Use the traversed raster image as the feature image.

It should be noted that, when a pixel does not have a parameter value of a characteristic parameter corresponding to the pixel, 0 may be assigned to the pixel. In addition, for each type of characteristic parameter, a feature image may be generated by using the foregoing processes (1) to (3). According to the present invention, the forgoing process is performed to generate nine feature images respectively by using the nine characteristic parameters: a building height, a ground object type, an altitude, a distance to the transmitter, a horizontal azimuth of the transmitter, a vertical azimuth of the transmitter, a height of the transmitter from the ground, a frequency at which the transmitter sends a signal, and transmit power of the transmitter.

Step 303: Construct a deep learning model based on the feature image and the measured path loss, where an input variable of the deep learning model is the feature image, and an output variable of the deep learning model is used to indicate the path loss between each receiver in the cell and the transmitter.

The deep learning model may be used to represent a function relationship between a characteristic parameter and a path loss, and an output variable of the deep learning model may be a path loss that is between each receiver in a cell and a transmitter and that is predicted by using the deep learning model. As shown in FIG. 3b, an output variable of the deep learning model is the feature image corresponding to the path loss. The feature image corresponding to the path loss corresponds to a path loss at a coordinate location. The feature image corresponding to the path loss is a feature image obtained after the feature image corresponding to each characteristic parameter is deeply learned by using the deep learning model, that is, the deep learning model implements image-to-image mapping. Alternatively, as shown in FIG. 3c, an output variable of the deep learning model is a vector corresponding to the path loss. An element in the vector corresponds to a path loss at a coordinate location, and the vector is a vector obtained after the feature image corresponding to each characteristic parameter is deeply learned by using the deep learning model, that is, the deep learning model implements image-to-vector mapping.

Optionally, the deep learning model is a convolutional neural network (convolutional neural networks, CNN). A process of constructing the deep learning model based on the feature image and the measured path loss includes:
inputting a feature image corresponding to a characteristic parameter into a convolutional neural network, and outputting a path loss between a transmitter and a receiver; and
backward inputting an error between a path loss output by the convolutional neural network and a measured path loss into the convolutional neural network, and adjusting a parameter of the convolutional neural network.

The foregoing process is repeated until an error between the path loss output by the convolutional neural network and the measured path loss converges. In this case, construction of the convolutional neural network is completed. It should be noted that, in a process of constructing the deep learning model, a feature image input into the convolutional neural network each time is a feature image of a characteristic parameter in sample data corresponding to different cells.

The convolutional neural network may be a multi-layer neural network, each layer includes a plurality of two-dimensional planes, and each plane includes a plurality of independent neurons. For example, the convolutional neural network may include a plurality of layers such as an input layer, a convolutional layer, a pooling layer (for example, a maximum pooling layer and a minimum pooling layer), an Inception V3 layer, an upsampling layer, and an output layer. Specifically, for a description of the convolutional neural network, refer to the prior art. Details are not described herein again.

For example, as shown in FIG. 3d, after the feature image is input to the convolutional neural network through the input layer, the path loss between the transmitter and the receiver is predicted by performing related processing on a convolutional layer, a maximum pooling layer, a convolutional layer, a maximum pooling layer, an Inception V3 layer, an Inception V3 layer, an upsampling layer, a convolutional layer, an upsampling layer, and a convolutional layer; and after the path loss is output through the output layer, the path loss is compared with the measured path loss. An error between the path loss and the measured path loss is propagated backward to the input layer of the convolutional neural network, to adjust a parameter of the layers in the convolutional neural network.

Step 304: Predict the path loss by using the constructed deep learning model.

The predicting the path loss by using the constructed deep learning model may be: predicting a path loss between the transmitter and a receiver in another cell, or predicting a path loss between another transmitter and a receiver in another cell. This is not limited.

For example, it is assumed that a deep learning model is constructed by using characteristic parameters between a transmitter 1 and a cell 1 to a cell 1000 and measured path losses between receivers in the cell 1 to the cell 1000 and the transmitter 1. The deep learning model may predict a path loss between a receiver in a cell 1001 and the transmitter 1, and may also predict a path loss between a receiver in another cell and a transmitter 2.

Compared with the prior art, in the solution shown in FIG. 3, sample data in an existing network is obtained, a deep learning model is constructed based on the sample data, a model mapping relationship between each characteristic parameter that affects radio propagation between a transmitter and a receiver and a path loss is obtained, and the path loss is predicted by using the model mapping relationship. In this way, an existing propagation model does not need to be calibrated, thereby improving efficiency of path loss prediction.

Further, in the solution shown in FIG. 3, to improve precision of a predicted path loss, before the constructing a deep learning model based on the feature image and the measured path loss, the method further includes:
filtering the sample data; and
normalizing the parameter value of the characteristic parameter and the measured path loss that are in the filtered sample data; and
the rasterizing the characteristic parameter to generate a feature image includes:
   rasterizing the normalized characteristic parameter to generate the feature image, and increasing a quantity of feature images through model flipping or model rotation, to increase a quantity of feature images input into the deep learning model. The model flipping may refer to flipping pixels in the feature image up and down or left and right symmetrically. The model rotation refers to rotating pixels in the feature image by a specific angle (for example, an angle of 60 degrees or 80 degrees).

The sample data may be filtered by using methods such as outlier discrimination (for example, a box plot method), raster information accuracy discrimination, and cell information amount discrimination, to eliminate noise impact. The outlier discrimination may refer to: for a plurality of measured path losses in a location area (for example, a raster), removing a measured path loss of which a value is relatively large or relatively small, and using any measured path loss obtained after the removal or an average value of measured path losses obtained after the removal as the measured path loss corresponding to the location area. The raster information accuracy discrimination may refer to: if a value of a measured path loss corresponding to a location area is less than a preset threshold, setting the location area to an invalid area, where the preset threshold may be set as required, and is not limited. The cell information amount discrimination may refer to: when a quantity of invalid areas corresponding to a cell is greater than or equal to a preset quantity, deleting sample data corresponding to the cell, where the preset quantity may be set as required, and is not limited.

The normalizing the parameter value of the characteristic parameter and the measured path loss that are in the filtered sample data may include: normalize the parameter value of the characteristic parameter and a value range of the measured path loss, to eliminate impact of dimensions of different features. Optionally, a max-min method is selected to normalize the parameter value of the characteristic parameter and the measured path loss that are in the filtered sample data.

The solutions provided in the embodiments of this application are described above mainly from a perspective of interaction between nodes. It may be understood that, to implement the foregoing functions, the path loss prediction apparatus includes corresponding hardware structures and/or software modules for performing the functions. A person of ordinary skill in the art should easily be aware that, in combination with algorithms steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment of this application, functional modules of the path loss prediction apparatus may be divided based on the foregoing method examples. For example, functional modules may be divided corresponding to functions, or two or more functions may be integrated into one processing module. The integrated module may be implemented in a form of hardware, or may be implemented in a form of a software functional module. It should be noted that, in this embodiment of this application, module division is used as an example, and is merely logical function division. In an actual implementation, another division manner may be used.

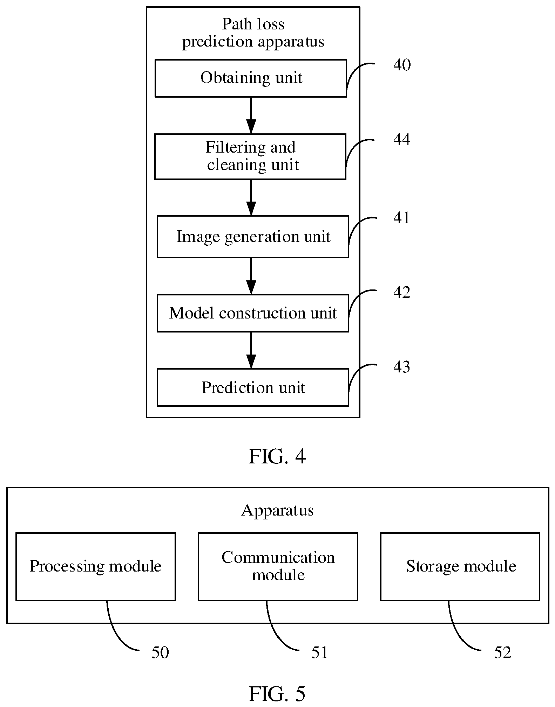

When each functional module is obtained through division based on each corresponding function, FIG. 4 is another possible schematic composition diagram of a path loss prediction apparatus. The path loss prediction apparatus may be configured to perform the solution in the foregoing method embodiment. As shown in FIG. 4, the path loss prediction apparatus may include: an obtaining unit 40, an image generation unit 41, a model construction unit 42, a prediction unit 43, and a filtering and cleaning unit 44.

The obtaining unit 40 is configured to obtain sample data, where the sample data includes a characteristic parameter that affects radio propagation between a transmitter and a cell, a parameter value of the characteristic parameter, and a measured path loss between a receiver in the cell and the transmitter, the parameter value of the characteristic parameter corresponds to a coordinate location, and the measured path loss corresponds to a coordinate location of the receiver. For example, the obtaining unit 40 is configured to support the path loss prediction apparatus in performing step 301.

The image generation unit 41 is configured to rasterize the characteristic parameter to generate a feature image, where the feature image includes at least one pixel, and each pixel corresponds to one parameter value. For example, the image generation unit 41 is configured to support the path loss prediction apparatus in performing step 302.

The model construction unit 42 is configured to construct a deep learning model based on the feature image and the measured path loss, where an input variable of the deep learning model is the feature image, and an output variable of the deep learning model is used to indicate the path loss between the transmitter and the cell. For example, the model construction unit 42 is configured to support the path loss prediction apparatus in performing step 303.

The prediction unit 43 is configured to predict the path loss by using the constructed deep learning model. For example, the prediction unit 43 is configured to support the path loss prediction apparatus in performing step 304.

Further, as shown in FIG. 4, the apparatus may further include: a filtering and cleaning unit 44, configured to: before the constructing, by the model construction unit 42, a deep learning model based on the feature image and the measured path loss, filter the sample data, and normalize the parameter value of the characteristic parameter and the measured path loss that are in the filtered sample data.

The image generation unit 41 is specifically configured to: rasterize the normalized characteristic parameter to generate a feature image, and increase a quantity of feature images through model flipping or model rotation.

It should be noted that all related content of the steps in the foregoing method embodiment can be cited in function description of the corresponding functional modules. Details are not described herein again. The path loss prediction apparatus provided in this embodiment of this application is configured to perform the foregoing path loss prediction method, and therefore can achieve a same effect as the foregoing path loss prediction method.

When an integrated unit is used. FIG. 5 shows an apparatus. The apparatus exists in a form of a chip product and is configured to perform the function of the path loss prediction apparatus in the foregoing embodiment. As shown in FIG. 5, the apparatus may include: a processing module 50 and a communication module 51.

The processing module 50 is configured to control and manage an action of the apparatus. For example, the processing module 50 is configured to support the apparatus in performing S301 to S304, and/or applied to another process of the technology described in this specification. The communications module 51 is configured to support the apparatus in communicating with another network entity. The apparatus may further include a storage module 52, configured to store program code and data of the apparatus.

The processing module 50 may be a processor or a controller. The processing module may implement or execute various example logical blocks, modules, and circuits described with reference to content disclosed in this application. Alternatively, the processor may be a combination that implements a computing function, for example, a combination of one or more microprocessors, or a combination of a DSP and a microprocessor, or the like. The communication module 51 may be a communications interface, a transceiver circuit, a communications interface, or the like. The storage module 52 may be a memory.

When the processing module 50 is a processor, the communications module 51 is a communications interface, and the storage module 52 is a memory, the apparatus in this embodiment of this application may be the apparatus shown in FIG. 2.

The foregoing description about implementations allows a person skilled in the art to understand that, for ease of description and brevity, division of the foregoing functional modules is used as an example for description. In an actual application, the foregoing functions can be allocated to different modules and implemented according to a requirement. In other words, an inner structure of an apparatus is divided into different functional modules to implement all or some of the functions described above.

In the several embodiments provided in this application, it should be understood that the disclosed apparatus and method may be implemented in another manner. For example, the described apparatus embodiment is merely an example. For example, the module or unit division is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may be one or more physical units, in other words, may be located in one place, or may be distributed on a plurality of different places. Some or all of the units may be selected based on actual requirements to achieve the objectives of the solutions in the embodiments.

In addition, functional units in the embodiments of this application may be integrated into one processing unit, or each of the units may exist alone physically, or two or more units may be integrated into one unit. The integrated units may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor to perform all or some of the steps of the methods described in the embodiments of this application. The foregoing storage medium includes any medium that can store program code, such as a USB flash drive, a removable hard disk, a ROM, a RAM, a magnetic disk, or an optical disc.

The protection scope of this application shall be subject to the protection scope of the claims.

## Claims

1. A path loss prediction method, wherein the method comprises:
obtaining (301) sample data in an existing network, wherein the sample data comprises a characteristic parameter that affects radio propagation between a transmitter and a cell, a parameter value of the characteristic parameter, and a measured path loss between each receiver in the cell and the transmitter, the parameter value of the characteristic parameter corresponds to a coordinate location, and the measured path loss corresponds to a coordinate location of the receiver;
rasterizing (302) the characteristic parameter to generate a feature image, wherein the feature image comprises at least one pixel, and each pixel corresponds to one parameter value;
constructing (303) a deep learning model based on the feature image and the measured path loss, wherein an input variable of the deep learning model is the feature image, and an output variable of the deep learning model is used to indicate the path loss between each receiver in the cell and the transmitter; and
predicting (304) the path loss by using the constructed deep learning model,
wherein the rasterizing (302) the characteristic parameter to generate a feature image comprises:
establishing a raster image by using the transmitter as a center, wherein the raster image comprises at least one raster, and different rasters correspond to different coordinate locations;
traversing each raster in the raster image, using the raster as a pixel, and using a parameter value of the characteristic parameter corresponding to the pixel as a value of the pixel; and
using the traversed raster image as the feature image,
wherein the output variable of the deep learning model is the feature image corresponding to the path loss or a vector corresponding to the path loss, and
wherein the feature image corresponding to the path loss corresponds to a path loss at a coordinate location, or an element in the vector corresponds to a path loss at a coordinate location,
wherein nine feature images are generated respectively by using nine characteristic parameters: a building height, a ground object type, an altitude, a distance to the transmitter, a horizontal azimuth of the transmitter, a vertical azimuth of the transmitter, a height of the transmitter from the ground, a frequency at which the transmitter sends a signal, and transmit power of the transmitter.

2. The method according to claim 1, wherein before the constructing (303) a deep learning model based on the feature image and the measured path loss, the method further comprises:
filtering the sample data; and
normalizing the parameter value of the characteristic parameter and the measured path loss that are in the filtered sample data; and
the rasterizing the characteristic parameter to generate a feature image comprises:
rasterizing the normalized characteristic parameter to generate the feature image, and increasing a quantity of feature images through model flipping or model rotation.

3. A path loss prediction apparatus, wherein the apparatus comprises:
an obtaining unit (40), configured to obtain sample data in an existing network, wherein the sample data comprises a characteristic parameter that affects radio propagation between a transmitter and a cell, a parameter value of the characteristic parameter, and a measured path loss between a receiver in the cell and the transmitter, the parameter value of the characteristic parameter corresponds to a coordinate location, and the measured path loss corresponds to a coordinate location of the receiver;
an image generation unit (41), configured to rasterize the characteristic parameter to generate a feature image, wherein the feature image comprises at least one pixel, and each pixel corresponds to one parameter value;
a model construction unit (42), configured to construct a deep learning model based on the feature image and the measured path loss, wherein an input variable of the deep learning model is the feature image, and an output variable of the deep learning model is used to indicate the path loss between the transmitter and the cell; and
a prediction unit (43), configured to predict the path loss by using the constructed deep learning model.
wherein
the image generation unit (41) is specifically configured to: establish a raster image by using the transmitter as a center, wherein the raster image comprises at least one raster, and different rasters correspond to different coordinate locations;
traverse each raster in the raster image, use the raster as a pixel, and use a parameter value of the characteristic parameter corresponding to the pixel as a value of the pixel; and
use the traversed raster image as the feature image,
wherein the output variable of the deep learning model is the feature image corresponding to the path loss or a vector corresponding to the path loss, and
wherein the feature image corresponding to the path loss corresponds to a path loss at a coordinate location, or an element in the vector corresponds to a path loss at a coordinate location,
wherein nine feature images are generated respectively by using nine characteristic parameters: a building height, a ground object type, an altitude, a distance to the transmitter, a horizontal azimuth of the transmitter, a vertical azimuth of the transmitter, a height of the transmitter from the ground, a frequency at which the transmitter sends a signal, and transmit power of the transmitter.

4. The apparatus according to claim 3, wherein the apparatus further comprises:
a filtering and cleaning unit (44), configured to: before the constructing, by the model construction unit, a deep learning model based on the feature image and the measured path loss, filter the sample data, and normalize the parameter value of the characteristic parameter and the measured path loss that are in the filtered sample data; and
the image generation unit (41) is specifically configured to: rasterize the normalized characteristic parameter to generate the feature image, and increase a quantity of feature images through model flipping or model rotation.

5. A path loss prediction apparatus (200), comprising: at least one processor (201, 207) and a memory (203), wherein
the memory (203) is configured to store a computer program, and when executed by the at least one processor (201, 207), the computer program is enabled to implement the path loss prediction method according to claim 1 or 2.

6. A computer storage medium, wherein the computer storage medium stores a computer program, and when executed by a processor, the program implements the path loss prediction method according to claim 1 or 2.

## Patentansprüche

1. Pfadverlustvorhersageverfahren, wobei das Verfahren Folgendes umfasst:
Erlangen (301) von Beispieldaten in einem bestehenden Netzwerk, wobei die Beispieldaten einen charakteristischen Parameter, der eine Funkausbreitung zwischen einem Sender und einer Zelle beeinflusst, einen Parameterwert des charakteristischen Parameters und einen gemessenen Pfadverlust zwischen jedem Empfänger in der Zelle und dem Sender umfassen, wobei der Parameterwert des charakteristischen Parameters einer Koordinatenposition entspricht und der gemessene Pfadverlust einer Koordinatenposition des Empfängers entspricht;
Rastern (302) des charakteristischen Parameters, um ein Merkmalsbild zu erzeugen, wobei das Merkmalsbild mindestens ein Pixel umfasst und jedes Pixel einem Parameterwert entspricht;
Erstellen (303) eines Deep-Learning-Modells basierend auf dem Merkmalsbild und dem gemessenen Pfadverlust, wobei eine Eingabevariable des Deep-Learning-Modells das Merkmalsbild ist und eine Ausgabevariable des Deep-Learning-Modells dazu verwendet wird, den Pfadverlust zwischen jedem Empfänger in der Zelle und dem Sender anzuzeigen; und
Vorhersagen (304) des Pfadverlusts unter Verwendung des erstellten Deep-Learning-Modells,
wobei das Rastern (302) des charakteristischen Parameters, um ein Merkmalsbild zu erzeugen, Folgendes umfasst:
Herstellen eines Rasterbilds unter Verwendung des Senders als einen Mittelpunkt, wobei das Rasterbild mindestens ein Raster umfasst und unterschiedliche Raster unterschiedlichen Koordinatenpositionen entsprechen;
Durchlaufen jedes Rasters in dem Rasterbild, Verwenden des Rasters als ein Pixel und Verwenden eines Parameterwerts des charakteristischen Parameters, der dem Pixel entspricht, als einen Wert des Pixels; und
Verwenden des durchlaufenen Rasterbilds als das Merkmalsbild, wobei die Ausgabevariable des Deep-Learning-Modells das Merkmalsbild, das dem Pfadverlust entspricht, oder ein Vektor, der dem Pfadverlust entspricht, ist und
wobei das Merkmalsbild, das dem Pfadverlust entspricht, einem Pfadverlust an einer Koordinatenposition entspricht oder ein Element in dem Vektor einem Pfadverlust an einer Koordinatenposition entspricht,
wobei jeweils neun Merkmalsbilder unter Verwendung von neun charakteristischen Parametern erzeugt werden: eine Gebäudehöhe, ein Bodenobjekttyp, eine Höhenlage, eine Entfernung zu dem Sender, ein horizontaler Azimut des Senders, ein vertikaler Azimut des Senders, eine Höhe des Senders über dem Boden, eine Frequenz, mit welcher der Sender ein Signal sendet, und eine Sendeleistung des Senders.

2. Verfahren nach Anspruch 1, wobei das Verfahren vor dem Erstellen (303) eines Deep-Learning-Modells basierend auf dem Merkmalsbild und dem gemessenen Pfadverlust ferner Folgendes umfasst:
Filtern der Beispieldaten; und
Normalisieren des Parameterwerts des charakteristischen Parameters und des gemessenen Pfadverlusts, die in den gefilterten Beispieldaten vorhanden sind; und
wobei das Rastern des charakteristischen Parameters, um ein Merkmalsbild zu erzeugen, Folgendes umfasst:
Rastern des normalisierten charakteristischen Parameters, um das Merkmalsbild zu erzeugen, und Erhöhen einer Anzahl von Merkmalsbildern durch Umdrehen des Modells oder Drehen des Modells.

3. Pfadverlustvorhersagevorrichtung, wobei die Vorrichtung Folgendes umfasst:
eine Erlangungseinheit (40), die dazu konfiguriert ist, Beispieldaten in einem bestehenden Netzwerk zu erlangen, wobei die Beispieldaten einen charakteristischen Parameter, der eine Funkausbreitung zwischen einem Sender und einer Zelle beeinflusst, einen Parameterwert des charakteristischen Parameters und einen gemessenen Pfadverlust zwischen einem Empfänger in der Zelle und dem Sender umfassen, wobei der Parameterwert des charakteristischen Parameters einer Koordinatenposition entspricht und der gemessene Pfadverlust einer Koordinatenposition des Empfängers entspricht;
eine Bilderzeugungseinheit (41), die dazu konfiguriert ist, den charakteristischen Parameter zu rastern, um ein Merkmalsbild zu erzeugen, wobei das Merkmalsbild mindestens ein Pixel umfasst und jedes Pixel einem Parameterwert entspricht;
eine Modellerstellungseinheit (42), die dazu konfiguriert ist, ein Deep-Learning-Modell basierend auf dem Merkmalsbild und dem gemessenen Pfadverlust zu erstellen, wobei eine Eingabevariable des Deep-Learning-Modells das Merkmalsbild ist und eine Ausgabevariable des Deep-Learning-Modells dazu verwendet wird, den Pfadverlust zwischen dem Sender und der Zelle anzuzeigen; und
eine Vorhersageeinheit (43), die dazu konfiguriert ist, den Pfadverlust unter Verwendung des erstellten Deep-Learning-Modells vorherzusagen.
wobei
die Bilderzeugungseinheit (41) insbesondere zu Folgendem konfiguriert ist: Herstellen eines Rasterbilds unter Verwendung des Senders als einen Mittelpunkt, wobei das Rasterbild mindestens ein Raster umfasst und unterschiedliche Raster unterschiedlichen Koordinatenpositionen entsprechen;
Durchlaufen jedes Rasters in dem Rasterbild, Verwenden des Rasters als ein Pixel und Verwenden eines Parameterwerts des charakteristischen Parameters, der dem Pixel entspricht, als einen Wert des Pixels; und
Verwenden des durchlaufenen Rasterbilds als das Merkmalsbild, wobei die Ausgabevariable des Deep-Learning-Modells das Merkmalsbild, das dem Pfadverlust entspricht, oder ein Vektor, der dem Pfadverlust entspricht, ist und
wobei das Merkmalsbild, das dem Pfadverlust entspricht, einem Pfadverlust an einer Koordinatenposition entspricht oder ein Element in dem Vektor einem Pfadverlust an einer Koordinatenposition entspricht,
wobei jeweils neun Merkmalsbilder unter Verwendung von neun charakteristischen Parametern erzeugt werden: eine Gebäudehöhe, ein Bodenobjekttyp, eine Höhenlage, eine Entfernung zu dem Sender, ein horizontaler Azimut des Senders, ein vertikaler Azimut des Senders, eine Höhe des Senders über dem Boden, eine Frequenz, mit welcher der Sender ein Signal sendet, und eine Sendeleistung des Senders.

4. Vorrichtung nach Anspruch 3, wobei die Vorrichtung ferner Folgendes umfasst:
eine Filter- und Reinigungseinheit (44), die zu Folgendem konfiguriert ist: vor dem Erstellen, durch die Modellerstellungseinheit, eines Deep-Learning-Modells basierend auf dem Merkmalsbild und dem gemessenen Pfadverlust, Filtern der Beispieldaten und Normalisieren des Parameterwerts des charakteristischen Parameters und des gemessenen Pfadverlusts, die in den gefilterten Beispieldaten vorhanden sind; und
wobei die Bilderzeugungseinheit (41) insbesondere zu Folgendem konfiguriert ist: Rastern des normalisierten charakteristischen Parameters, um das Merkmalsbild zu erzeugen, und Erhöhen einer Anzahl von Merkmalsbildern durch Umdrehen des Modells oder Drehen des Modells.

5. Pfadverlustvorhersagevorrichtung (200), umfassend:
mindestens einen Prozessor (201, 207) und einen Speicher (203), wobei
der Speicher (203) dazu konfiguriert ist, ein Computerprogramm zu speichern, und das Computergramm, wenn es durch den mindestens einen Prozessor (201, 207) ausgeführt wird, in die Lage versetzt wird, das Pfadverlustvorhersageverfahren nach Anspruch 1 oder 2 zu implementieren.

6. Computerspeichermedium, wobei das Computerspeichermedium ein Computerprogramm speichert und das Programm, wenn es durch einen Prozessor ausgeführt wird, das Pfadverlustvorhersageverfahren nach Anspruch 1 oder 2 implementiert.

## Revendications

1. Procédé de prédiction d'affaiblissement de propagation, dans lequel le procédé comprend :
l'obtention (301) de données d'échantillon dans un réseau existant, dans lequel les données d'échantillon comprennent un paramètre caractéristique qui affecte la propagation radio entre un émetteur et une cellule, une valeur de paramètre du paramètre caractéristique, et un affaiblissement de propagation mesuré entre chaque récepteur dans la cellule et l'émetteur, la valeur de paramètre du paramètre caractéristique correspond à un emplacement de coordonnées, et l'affaiblissement de propagation mesuré correspond à un emplacement de coordonnées du récepteur ;
la rastérisation (302) du paramètre caractéristique pour générer une image caractéristique, dans lequel l'image caractéristique comprend au moins un pixel, et chaque pixel correspond à une valeur de paramètre ;
la construction (303) d'un modèle d'apprentissage profond sur la base de l'image caractéristique et de l'affaiblissement de propagation mesuré, dans lequel une variable d'entrée du modèle d'apprentissage profond est l'image caractéristique, et une variable de sortie du modèle d'apprentissage profond est utilisée pour indiquer l'affaiblissement de propagation entre chaque récepteur dans la cellule et l'émetteur ; et
la prédiction (304) de l'affaiblissement de propagation à l'aide du modèle d'apprentissage profond construit,
dans lequel la rastérisation (302) du paramètre caractéristique pour générer une image caractéristique comprend :
l'établissement d'une image matricielle à l'aide de l'émetteur comme centre, dans lequel l'image matricielle comprend au moins une trame, et différentes trames correspondent à différents emplacements de coordonnées ;
la traversée de chaque trame dans l'image matricielle, à l'aide de la trame comme pixel, et à l'aide d'une valeur de paramètre du paramètre caractéristique correspondant au pixel comme valeur du pixel ; et
l'utilisation de l'image matricielle traversée comme image caractéristique,
dans lequel la variable de sortie du modèle d'apprentissage profond est l'image caractéristique correspondant à l'affaiblissement de propagation ou un vecteur correspondant à l'affaiblissement de propagation, et
dans lequel l'image caractéristique correspondant à l'affaiblissement de propagation correspond à un affaiblissement de propagation au niveau d'un emplacement de coordonnées, ou un élément dans le vecteur correspond à un affaiblissement de propagation au niveau d'un emplacement de coordonnées,
dans lequel neuf images caractéristiques sont générées respectivement à l'aide de neuf paramètres caractéristiques : une hauteur de bâtiment, un type d'objet au sol, une altitude, une distance à l'émetteur, un azimut horizontal de l'émetteur, un azimut vertical de l'émetteur, une hauteur de l'émetteur par rapport au sol, une fréquence à laquelle l'émetteur envoie un signal, et une puissance d'émission de l'émetteur.

2. Procédé selon la revendication 1, dans lequel avant la construction (303) d'un modèle d'apprentissage profond sur la base de l'image caractéristique et de l'affaiblissement de propagation mesuré, le procédé comprend également :
le filtrage des données d'échantillon ; et
la normalisation de la valeur de paramètre du paramètre caractéristique et de l'affaiblissement de propagation mesuré qui se trouvent dans les données d'échantillon filtrées ; et
dans lequel la rastérisation du paramètre caractéristique pour générer une image caractéristique comprend :
la rastérisation du paramètre caractéristique normalisé pour générer l'image caractéristique, et l'augmentation d'une quantité d'images caractéristiques par retournement de modèle ou rotation de modèle.

3. Appareil de prédiction d'affaiblissement de propagation, dans lequel l'appareil comprend :
une unité d'obtention (40), configurée pour obtenir des données d'échantillon dans un réseau existant, dans lequel les données d'échantillon comprennent un paramètre caractéristique qui affecte la propagation radio entre un émetteur et une cellule, une valeur de paramètre du paramètre caractéristique, et un affaiblissement de propagation mesuré entre un récepteur dans la cellule et l'émetteur, la valeur de paramètre du paramètre caractéristique correspond à un emplacement de coordonnées, et l'affaiblissement de propagation mesuré correspond à un emplacement de coordonnées du récepteur ;
une unité de génération d'image (41), configurée pour rastériser le paramètre caractéristique pour générer une image caractéristique, dans lequel l'image caractéristique comprend au moins un pixel, et chaque pixel correspond à une valeur de paramètre ;
une unité de construction de modèle (42), configurée pour construire un modèle d'apprentissage profond sur la base de l'image caractéristique et de l'affaiblissement de propagation mesuré, dans lequel une variable d'entrée du modèle d'apprentissage profond est l'image caractéristique, et une variable de sortie du modèle d'apprentissage profond est utilisée pour indiquer l'affaiblissement de propagation entre l'émetteur et la cellule ; et
une unité de prédiction (43), configurée pour prédire l'affaiblissement de propagation à l'aide du modèle d'apprentissage profond construit.
dans lequel
l'unité de génération d'image (41) est spécifiquement configurée pour : établir une image matricielle à l'aide de l'émetteur comme centre, dans lequel l'image matricielle comprend au moins une trame, et différentes trames correspondent à différents emplacements de coordonnées ;
traverser chaque trame dans l'image matricielle, utiliser la trame comme pixel, et utiliser une valeur de paramètre du paramètre caractéristique correspondant au pixel comme valeur du pixel ; et
utiliser l'image matricielle traversée comme l'image caractéristique,
dans lequel la variable de sortie du modèle d'apprentissage profond est l'image caractéristique correspondant à l'affaiblissement de propagation ou un vecteur correspondant à l'affaiblissement de propagation, et
dans lequel l'image caractéristique correspondant à l'affaiblissement de propagation correspond à un affaiblissement de propagation au niveau d'un emplacement de coordonnées, ou un élément dans le vecteur correspond à un affaiblissement de propagation au niveau d'un emplacement de coordonnées,
dans lequel neuf images caractéristiques sont générées respectivement à l'aide de neuf paramètres caractéristiques : une hauteur de bâtiment, un type d'objet au sol, une altitude, une distance à l'émetteur, un azimut horizontal de l'émetteur, un azimut vertical de l'émetteur, une hauteur de l'émetteur par rapport au sol, une fréquence à laquelle l'émetteur envoie un signal, et une puissance d'émission de l'émetteur.

4. Appareil selon la revendication 3, dans lequel l'appareil comprend également :
une unité de filtrage et de nettoyage (44), configurée pour :
avant la construction, par l'unité de construction de modèle, d'un modèle d'apprentissage profond sur la base de l'image caractéristique et de l'affaiblissement de propagation mesuré, filtrer les données d'échantillon, et normaliser la valeur de paramètre du paramètre caractéristique et l'affaiblissement de propagation mesuré qui se trouvent dans les données d'échantillon filtrées ; et
l'unité de génération d'image (41) est spécifiquement configurée pour : rastériser le paramètre caractéristique normalisé pour générer l'image caractéristique, et augmenter une quantité d'images caractéristiques par retournement de modèle ou rotation de modèle.

5. Appareil de prédiction d'affaiblissement de propagation (200), comprenant : au moins un processeur (201, 207) et une mémoire (203), dans lequel
la mémoire (203) est configurée pour stocker un programme informatique, et lorsqu'il est exécuté par l'au moins un processeur (201, 207), le programme informatique est activé pour mettre en œuvre le procédé de prédiction d'affaiblissement de propagation selon la revendication 1 ou 2.

6. Support de stockage informatique, dans lequel le support de stockage informatique stocke un programme informatique, et lorsqu'il est exécuté par un processeur, le programme met en œuvre le procédé de prédiction d'affaiblissement de propagation selon l'une quelconque des revendications 1 ou 2.
